# EUROPÄISCHE PATENTSCHRIFT

(11) **EP 0 498 386 B1**
(45) Veröffentlichungstag und Bekanntmachung des Hinweises auf die Patenterteilung: **20.12.1995**
(21) Anmeldenummer: 92101879.2
(22) Anmeldetag: 05.02.1992
(51) Int. Cl.: G01K 7/18

(54) **Temperaturfühler und Verfahren zu seiner Herstellung**
Temperature sensor and method of making it
Capteur de température et procédé pour sa fabrication

(30) Priorität: 07.02.1991 DE 4103642
(43) Veröffentlichungstag der Anmeldung: 12.08.1992
(73) Patentinhaber: E.G.O. Elektro-Geräte Blanc und Fischer GmbH & Co. KG, D-75038 Oberderdingen (DE)
(72) Erfinder: Berger, Siegbert, W-7518 Bretten (DE); Brennenstuhl, Volker, W-7129 Zaberfeld (DE); Gössler, Gerhard, W-7519 Oberderdingen (DE); Mohr, Hans, W-7519 Sulzfeld (DE); Schilling, Wilfried, W-7527 Kraichtal-Mü (DE); Schwackenhofer, Jürgen, W-7519 Sulzfeld (DE); Wilde, Eugen, W-7134 Knittlingen 2 (DE)
(74) Vertreter: Patentanwälte Ruff, Beier, Schöndorf und Mütschele

(56) Entgegenhaltungen:
- EP-A- 0 043 400
- DE-A- 1 921 429
- US-A- 2 728 833
- US-A- 3 638 303
- US-A- 3 723 935

## Beschreibung

Die Erfindung betrifft einen Temperaturfühler nach dem Oberbegriff des Patentanspruches 1 sowie ein Verfahren zur Herstellung eines Temperaturfühlers nach dem Oberbegriff des Patentanspruches 12, des Patentanspruches 13 oder des Patentanspruches 14. Der Temperaturfühler weist ein temperaturempfindliches Fühlelement auf, das in einem Fühlergehäuse im wesentlichen geschützt angeordnet sein kann.

Temperaturfühler arbeiten meist aufgrund der thermischen Ausdehnung einer Flüssigkeit oder eines Feststoffes bzw., wenn sie als elektrische oder elektronische Temperaturerfassungsgeräte ausgebildet sind, aufgrund der temperaturabhängigen Änderung des elektrischen Widerstandswertes des Fühlelementes bzw. Temperatursensors.

Hierbei können sich die Widerstandswerte linear oder nicht linear bzw. positiv oder negativ mit der Temperatur ändern. Insbesondere bei Widerstandsfühlern wird die Temperatur für die Messung in einem räumlich nur sehr eng begrenzten Bereich erfaßt, da sich der Meßwiderstand bzw. das Thermoelement in der Spitze bzw. im vorderen Bereich des Fühlergehäuses befindet. Bekannte Temperaturfühler sind meist recht empfindlich gegen thermische, elektrische, elektromagnetische und mechanische Belastung bzw. Überlastung, wobei eine Erdung oder eine Sicherung gegen Kurzschluß nur recht schwierig erreicht werden kann. Ferner sind bekannte Temperaturfühler teuer in der Herstellung und bei der Verwendung von problematischen Werkstoffen, wie Natrium oder Kalium, umweltgefährdend. Die Montage bekannter Temperaturfühler ist meist schwierig.

Die US-A-2 728 833 zeigt einen Temperaturfühler, bei welchem die Einbettmasse lediglich so geringfügig verdichtet ist, daß dadurch das Fühlelement keinen Spannungen ausgesetzt ist.

Im Falle der DE-A-1 921 429 ist statt einer Einbettmasse eine Zwischenschicht vorgesehen, welche nicht verdichtet ist.

Gemäß der US-A-3 638 303 ist es bekannt, die Einbettmasse lediglich soweit zu verdichten, daß das Fühlelement noch Bewegungen ausführen kann und keine Verfestigung eintritt.

Die EP-A-0 043 400 betrifft einen Temperaturfühler, bei welchem die Einbettmasse lediglich durch die Federspannung des Fühlelementes verdichtet wird.

Beim Temperaturfühler nach der US-A-3 723 935 wird die Einbettmasse lediglich so verpreßt und verdichtet, daß sie das Fühlelement eng umgibt.

Der Erfindung liegt die Aufgabe zugrunde, einen Temperaturfühler der genannten Art zu schaffen, bei welchem Nachteile bekannter Ausbildungen vermieden sind und der insbesondere gegen auftretende Belastungen eine hohe Robustheit sowie hohe Genauigkeit aufweist bzw. einfach herzustellen und zu montieren ist. Ggf. soll der Temperaturfühler in einem sehr hohen Meßbereich über z.B. mehrere hundert Grad Celsius einsetzbar sein und im wesentlichen unabhängig vom Meßbereich eine hohe Meßgenauigkeit haben.

Gemäß der Erfindung werden die Merkmale der Patentansprüche 1, 12, 13 bzw. 14 vorgeschlagen. Der Temperatursensor ist teilweise oder vollständig in einer Bettung angeordnet und kann dadurch selbst bei geringsten Querschnitten des Fühlelementes ausreichend verstärkt bzw. durch Ummantelung geschützt werden. Die Bettung kann eine geringere Wärmeleitfähigkeit als das Fühlelement insbesondere dann haben, wenn ihre Dicke zwischen dem Außenumfang des Fühlelementes und dem der zu messenden Temperatur ausgesetzten Außenumfang des Temperaturfühlers nur wenige Millimeter, beispielsweise weniger als 5 oder 2 mm beträgt. Besonders Zweckmäßig ist es, wenn das Fühlergehäuse bzw. dessen Außenfläche nicht durch die Einbettung, sondern durch ein gesondertes Bauelement gebildet ist, dessen Wärmeleitfähigkeit wiederum wesentlich größer als die der Einbettung ist. Günstige Wärmeleitverhältnisse ergeben sich dabei insbesondere, wenn die Einbettung eng und im wesentlichen ganzflächig an den Außenflächen des Fühlelementes und/oder der Innenfläche des Fühlergehäuses anliegt, wodurch die Trägheit des Temperaturfühlers infolge großer Wärmeleit-Querschnitte und ggf. geringer Wärmespeicherkapazität eines oder aller der genannten Bauteile stark reduziert werden kann. Die Wandungsdicke des Fühlergehäuses ist zweckmäßig wesentlich geringer als die Querschnittsdicke der Einbettung und kann in der Größenordnung der Materialdicke des Fühlelementes, nämlich wesentlich unterhalb 1 mm liegen.

Die der Erfindung zugrunde liegende Aufgabe läßt sich stattdessen auch dadurch lösen, daß, insbesondere bei einem elektrischen Widerstandsfühler, der Erfassungsbereich des Temperaturfühlers, d.h. derjenige Bereich, der dem zu messenden Medium, nämlich einem Gas, einer Flüssigkeit und/oder einem festen Körper, auszusetzen ist, langgestreckt ist und eine Länge hat, die weit über dem 10-fachen der Weite des Außenguerschnittes des Temperaturfühlers liegt und das 40- bis mindestens 60-fache oder sogar das 80- bis 100- bzw. 120-fache dieser Weite betragen kann. Über diese Länge kann mindestens eines der Bauelemente des Temperaturfühlers oder können alle Bauelemente im wesentlichen konstante Außen- und/oder Innenquerschnitte aufweisen, so daß sich über die gesamte Länge bzw. in jedem beliebigen Längsabschnitt davon gleiche thermische Charakteristika hinsichtlich der Wärmeleitfähigkeit im Innern, des Wärmetausches nach außen, der Wärmespeicherung und/oder ggf. des elektrischen Widerstandes ergeben.

Vorteilhaft ist die Bettung durch eine zunächst fließ- bzw. schüttfähige Masse gebildet, in welche mindestens ein Fühlelement zuerst eingesetzt und die dann erst unter Verdichtung bzw. Verfestigung verpreßt wird, so daß sie unter Pressung und ganzflächig an die Außenflächen des Fühlelementes angelegt ist. Dadurch kann im wesentlichen das gesamte Fühlelement vollständig und lückenlos mit einer verpreßten Körnung oder dgl. umschlossen werden, die trotz biegeelastischer Nachgiebigkeit des Temperaturfühlers eine hohe Dauerfestigkeit gewährleistet. Ist ein gesondertes Fühlergehäuse vorgesehen, so kann die Einbettmasse auch erst nach dem Einbringen in dieses Gehäuse verfestigt bzw. verpreßt und dadurch mit Pressung gegen die Innenflächen des Fühlergehäuses im wesentlichen vollständig und lückenlos angelegt werden, so daß sich ein Verbundkörper aus den drei Bauelementen ergibt, der eine sehr hohe Festigkeit hat. Statt einer rüttelnden oder axialen Verdichtung der Einbettmasse wird zweckmäßig eine Verpressung dadurch bewirkt, daß Wandungen des Fühlergehäuses nach dem Einsetzen des Fühlelementes und dem Einfüllen der Einbettmasse quer zu ihren Flächen gegen das Fühlelement durch Druckbelastung von außen verformt werden, wodurch die Einbettmasse unter gleichzeitigem Einschluß des Fühlelementes verpreßt wird. Dabei kann, z.B. durch Rollen, auch eine gleichmäßige Gefügeverdichtung der Wandungen des Fühlergehäuses über dessen gesamten Umfang insbesondere dann erzielt werden, wenn der Werkstoff des Fühlergehäuses eine ausreichend Zähigkeit aufweist. Durch ein Bindemittel könnte die Festigkeit der Einbettung noch weiter erhöht werden.

Der Temperaturfühler, insbesondere das Fühlelement und/oder die Einbettung sind zweckmäßig wenigstens im Temperatur-Erfassungsbereich wenigstens flüssigkeitsdicht bzw. auch gasdicht verkapselt, wobei auch Herausführungen für Meßwertleiter, die das Fühlergehäuse durchsetzen, entsprechend abgedichtet sein können. Dazu kann beispielsweise die Einbettung im Endbereich mit einem Silikonöl getränkt sein, das für einen Feuchtigkeits-Luftabschluß sorgt.

Das Fühlelement, die Einbettung und/oder das Fühlergehäuse können zwar im wesentlichen beliebige Form aufweisen, sind jedoch bevorzugt jeweils im wesentlichen strangförmig ausgebildet, so daß sie annähernd über ihre gesamte Länge konstante Außen- und/oder Innenquerschnitte haben und sich konstante Abstände des Außenumfanges des Fühlelementes vom Außenumfang des Temperaturfühlers ergeben. Ferner können dadurch ohne besonderen Aufwand Fühlerstränge unterschiedlicher Länge z.B. zunächst als geradlinige Stäbe hergestellt und dann durch Biegung in eine beliebige, für den jeweiligen Anwendungsfall geeignete Form gebracht werden. Diese Form kann mindestens einen teil- oder vollkreisförmigen Abschnitt, mindestens einen abgewinkelten Abschnitt und/oder mindestens einen geradlinigen Abschnitt aufweisen, wobei eine haarnadelförmige Ausbildung mit zwei in geringem Abstand zueinander sowie in einer gemeinsamen Ebene nebeneinander liegenden und etwa gleich langen Schenkeln besonders geeignet ist, da die Schenkelenden als Anschlußenden vorgesehen sein können und z.B. einen zweipoligen Stecker bilden. Der Krümmungsradius des jeweils gekrümmten Abschnittes kann dabei kleiner als das doppelte der Weite des Außenguerschnittes des Temperaturfühlers sein, während die Schenkelenden in einem Abstand voneinander liegen können, der in der Größenordnung dieser Weite liegt.

Eine besonders vorteilhafte Ausbildung des Erfindungsgegenstandes ergibt sich, wenn der Temperaturfühler nach Art eines Rohrheizkörpers ausgebildet ist und einen durch einen Abschnitt eines Profilstabes bzw. eines nahtlosen Rohres gebildeten Außenmantel aufweist, der vollständig berührungsfrei und etwa koaxial einen in die keramische Einbettung eingeschlossenen elektrischen Widerstandsdraht aufnimmt. Dieser erstreckt sich zweckmäßig über mindestens die Hälfte der Länge des Rohrmantels bzw. annähernd über dessen gesamte Länge, so daß seine beiden Enden im Bereich der beiden Enden des Rohrmantels zur Verbindung mit Anschlußleitern geeignet sind. Die Enden des Rohrmantels können in der beschriebenen Weise abgedichtet mit formstabil vorgefertigten Verschlußstücken aus Isolierwerkstoff oder dgl. verschlossen sein, welche kurze Fortsetzungen der Enden des Rohrmantels bilden und zentrale Durchgangsöffnungen aufweisen, welche von im wesentlichen geradlinigen Anschlußstiften abgedichtet durchsetzt sind. Die über die inneren Enden der Verschlußstücke vorstehenden Enden der Anschlußstifte sind mit dem jeweils zugehörigen Ende des Fühlementes leitend verbunden, während ihre etwa in der Achse des jeweils zugehörigen Endes des Temperaturfühlers vorstehenden äußeren Enden freiliegende Anschlußstifte bilden, die durch Schweißen oder über an ihnen befestigte Steckelemente, wie Flachsteckzungen, mit den Anschlußleitungen verbunden werden können. Der Rohrmantel kann bis zu seinen Enden konstante Außen- bzw. Innenquerschnitte aufweisen, und die Verschlußstücke können in diese Enden anschlagbegrenzt eingesteckt und dadurch genau zentriert bzw. ausgerichtet sein. Die Einbettung kann dabei bis an die innere Endfläche des jeweiligen Verschlußstückes reichen und somit auch das zugehörige innere Ende des Anschlußgliedes und dessen Verbindung mit dem Fühlelement umschließen.

Ein Verschlußstück kann auch beispielsweise als ein Silikonkautschuk-Stopfen gebildet sein oder es kann ein über den Anschlußstift gezogener Silikonschlauch durch das Herunterwalzen des Gehäusemantels fest zwischen diesem und dem Anschlußstift eingeklemmt werden. Auch eine Ein- bzw. Umschmelzung des Fühlergehäuseendes und des Anschlußstiftes mit einer Glasfritte ist möglich, um eine gute Abdichtung herbeizuführen. Um Meßwertverfälschungen zu vermeiden, ist es vorteilhaft, wenn die beiden Enden des Fühlelementes, d.h. ihre elektrischen Anschlüsse am Anschlußstift oder am Fühlergehäuse, beide auf der gleichen Temperatur liegen, weil sich sonst Thermospannungen ergeben könnten. Beide sollten also entweder im Temperaturerfassungsbereich liegen oder beide außerhalb dessen.

Als Fühlelement wird zweckmäßig eine Drahtwendel verwendet, die einen Kernraum umschließenden, gleichmäßig durchbrochenen Mantel bildet, so daß auch der Kernraum und der gesamte wendelförmige Manteldurchbruch mit Einbettmasse verfüllt sein können und sich eine enge Umschließung aller Oberflächen des Fühlementes mit Einbettmasse ergibt.

Das Fühlelement ist zweckmäßig so ausgelegt, daß sich sein elektrischer Widerstandswert sehr stark mit der Temperatur ändert, wie z.B. über den thermischen Meßbereich um mehrere hundert Prozent. Hierzu kann das Fühlelement aus nickel-, eisen- und/oder kobalthaltigen Werkstoffkombinationen bestehen. Das Fühlergehäuse kann aus hochtemperaturbeständigem Stahl, insbesondere rostfreiem Edelstahl, bestehen und metallisch blanke oder oxidierte Oberflächen haben. Die Einbettung, die ein Wärmeübertragungsmedium zwischen der Außenfläche des Temperaturfühlers und dem Fühlelement bildet, besteht zweckmäßig aus elektrisch isolierendem Werkstoff, der ein keramischer Werkstoff sein kann bzw. aus mindestens einem Metalloxid, insbesondere Magnesiumoxid, besteht. Die Verschlußstücke bestehen zweckmäßig aus einem ausgehärteten Formwerkstoff, der ein keramischer Werkstoff, wie Steatit, sein kann.

Dadurch ergibt sich eine hochtemperaturfeste Ausbildung des Temperaturfühlers, der ohne weiteres bis etwa 750° C oder sogar darüberhinaus eingesetzt werden kann. Die Querschnittsweite des zweckmäßig im wesentlichen kreisrunde Außenquerschnitte aufweisenden Temperaturfühlers liegt zweckmäßig etwa in der Größenordnung zwischen 3 und 7 mm, vorzugsweise bei 4,2 bzw. 6,5 mm um seinerseits eine ausreichend geringe Trägheit des Ansprechverhaltens und andererseits eine ausreichend hohe Formstabilität zu erzielen. Wie Rohrheizkörper kann der Temperaturfühler, je nach Anwendungsfall, aber auch Querschnitte aufweisen, die von der Kreisform abweichen und z.B. zur thermischen Ankopplung an eine Meßstelle mindestens eine abgeflachte Querschnittsseite haben bzw. dreieckförmig mit abgerundeten Eckbereichen sind. Der Fühler kann auch in einen Formkörper aus Metall oder dgl. teilweise oder vollständig, z.B. durch Eingießen, eingebettet werden.

Dem Fühlelement, das zweckmäßig mit einem Meßstrom beaufschlagt wird, ist vorteilhaft eine Verstärkerschaltung eines Auswertgerätes zur Auswertung des Meßstromes zugeordnet. Für die Ausbildung und Bemessung dieser Verstärkerschaltung ist es günstig, wenn das Fühlelement bei Raumtemperatur, nämlich etwa 20° C, einen Widerstandswert in der Größenordnung von insbesondere mehr als 5 Ohm und/oder weniger als 100 Ohm hat. In Verbindung mit dem durch das Fühlelement fließenden Meßstrom von einigen Milliampere ergeben sich damit Meßspannungen im Millivolt-Bereich.

Der Temperaturfühler läßt sich auf einfache Weise mit großer Robustheit und preiswert herstellen, wobei die verwendeten Werkstoffe umweltverträglich und wiederverwertbar sind und selbst bei Störfällen von dem Temperaturfühler keine Gefahren ausgehen. Die Montage des Temperaturfühlers ist einfach, wobei für seinen Anschluß keine Mikroverbindungen erforderlich sind. Eine eventuelle Funktionsuntüchtigkeit des Temperaturfühlers infolge mechanischer Beschädigungen kann sehr leicht erkannt werden. Ferner kann das Fühlergehäuse geerdet und dadurch für die Schutzklasse I geeignet gemacht werden. Auch kann eine Kurzschlußsicherheit des Temperaturfühlers erreicht werden. Der Temperaturfühler hat ein integrierendes Fühlerverhalten, wobei eine Mittelwertbildung über die Temperatur möglich ist. Gegen Überstrom, Überspannung bzw. elektromagnetische Störungen ist der Temperaturfühler unempfindlich, wodurch die mit dem Fühlelement verschaltete Elektronik geschützt ist.

Das Verfahren zur Herstellung des Temperaturfühlers kann wie die übliche Herstellung eines Rohrheizkörpers durchgeführt werden, wobei üblicherweise auch eine Querschnittsreduzierung des Mantels zur Verpressung der Einbettmasse durchgeführt werden. Durch alle Verformungsverfahren, einschließlich der Wendelbildung hat das als Draht ausgebildete Fühlerelement einen bis zu 10 Prozent höheren Widerstand als im weichen Zustand. Es sollte daher, um bei einer späteren Temperaturbelastung keine Widerstandsänderung befürchten zu müssen, der Temperaturfühler nach seiner soweitigen Fertigstellung einem Glühvorgang unterzogen werden, der beispielsweise bei Temperaturen von 1050° Celsius im Ofen oder durch Eigenerwärmung mit Strombeaufschlagung des Fühlers durchgeführt werden kann. Es reicht eine relativ kurzfristige Erwärmung über 10 bis 20 Sekunden.

Es hat sich gezeigt, daß durch eine Verformung des Fühlergehäuses, beispielsweise des Rohrmantels, sich der Widerstand des Fühlelementes ebenfalls ändert, und zwar um Werte bis zu 10, maximal sogar 20 Prozent höher wird. Diese anfänglich kaum zu erklärende Erscheinung scheint, wie Versuche und Anfertigung von Schliffbildern gezeigt haben, aus einer bei einer Verpressung des Mantels entstehende gleichzeitige Durchmesserreduzierung und Längung des Fühlerelementes, insbesondere, wenn es als Drahtwendel ausgebildet ist, zu resultieren. Auch die Eindrückung der einzelnen Körner der Einbettmasse in den Draht beeinflußt dessen Widerstand. Auf dieser Basis kann vorteilhaft eine Widerstandsjustizierung im fertigen Zustand des Fühlers vorgenommen werden, in dem der Widerstand des Fühlelementes so bemessen wird, daß sie etwas unter dem Sollwert liegt und dann durch gezieltes Verpressen des Fühlergehäuses, beispielsweise aus einem kreisförmigen Querschnitt in eine abgerundet quadratische, dreieckige oder ähnliche Form, unter gleichzeitiger Messung des Widerstandswertes der Widerstand auf den Sollwert erhöht und beim Erreichen die Verpressung abgebrochen wird.

Dieses Verfahren läßt sich auch mit dem Glühverfahren verbinden, wobei es jedoch normalerweise diesem nachgeschaltet sein sollte. Wie beschrieben, verringert das Glühen den Widerstand, während durch die Verpressung eine Erhöhung eintritt. Durch Kombination beider Verfahren kann eine Justierung nach beiden Seiten vorgenommen werden.

Untersuchungen haben gezeigt, daß eine unerwünschte und bisher nicht erforschte Erhöhung des Widerstandes derartiger Fühler bei langfristigem Einsatz, insbesondere bei höheren Temperaturen, auf eine Oxidation des Fühlelementes innerhalb der Einbettung zurückzuführen ist. Offensichtlich läßt sich auch bei gutem Abschluß der Enden nicht vermeiden, das Luft eindringt und den Fühler mit einer Oxydschicht überzieht, die einen höheren Widerstand hat als das durch sie verbrauchte Metall. Nach der Erfindung kann der Fühler in einem Stabilisierungsverfahren gegen diesess Abdriften des Wiederstandes geschützt werden. Dabei wird der fertiggestellte Temperaturfühler im Ofen oder durch Eigenerwärmung zahlreiche Male, beispielsweise 10 bis 100-mal über jeweils mehrere Stunden aufgeheizt, beispielsweise auf 600° Celsius, und wieder abgekühlt. Zur Beschleunigung der Oxidation kann dies auch in mit Sauerstoff angereicherter Atmosphäre erfolgen. Durch die thermische Ausdehnung und Zusammenziehung der in der Einbettmasse eingeschlossenen Luftreste "pumpt" sich die das Fühlelement oxidierende Luft in den Heizkörper und bildet eine gleichmäßige Oxydschicht. Der Widerstandswert nimmt dabei um einige Prozente, beispielsweise 2,5 Prozent zu. Dies kann bei der Auslegung des Fühlelements bereits berücksichtigt werden, so daß der Widerstandswert dann auf seinen Sollwert "hochoxidiert" wird. Auch dieses Verfahren kann zu einer Feinjustierung des Widerstandswertes verwendet werden.

Ein so behandelter Temperaturfühler ist dann gegen weitere zyklische Langzeiteinflüsse unempfindlich. Die Oxidationsstabilisierung kann dadurch unterstützt werden, daß sie vor dem endgültigen Verschließen der Heizleiterenden erfolgt, wenn diese beispielsweise durch eine Ummantelung, Einschmelzung oder dergleichen erfolgt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in den Zeichnungen dargestellt und wird im folgenden näher erläutert. In den Zeichnungen zeigen:
- Fig. 1: einen erfindungsgemäßen Temperaturfühler in Ansicht,
- Fig. 2: einen Ausschnitt der Fig. 1 in vergrößerter sowie geschnittener Darstellung
- Fig. 3: einen Querschnitt durch Fig. 2,
- Fig. 4: einen Längsschnitt durch eine weitere Ausführungsform der Erfindung und
- Fig. 5: einen Querschnitt nach Linie V. in Fig. 4.

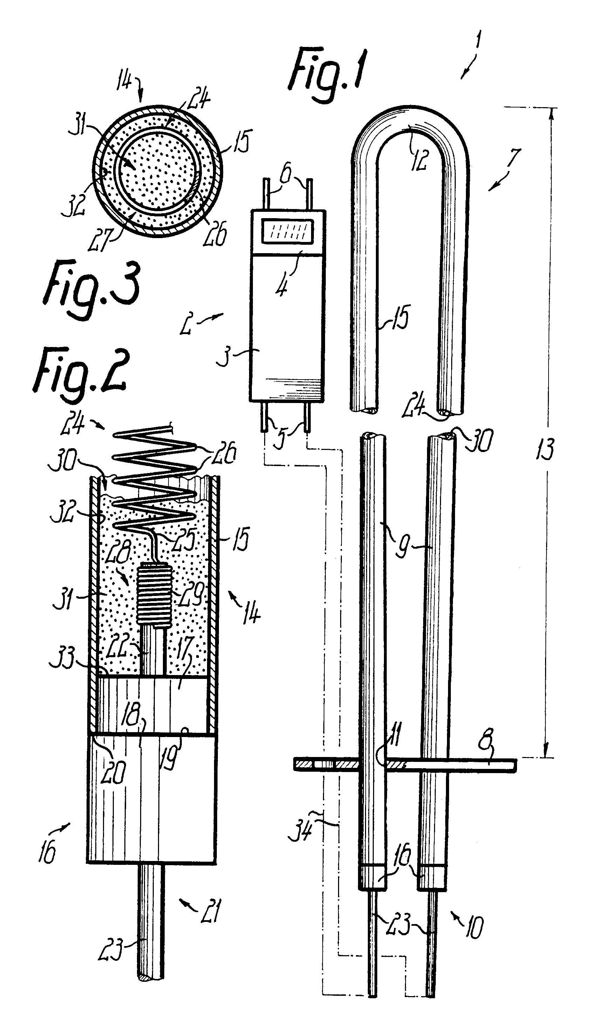

Der Temperaturfühler 1 gemäß den Figuren 1 bis 3 ist mit denselben Vorrichtungen, Einrichtungen, Maschinen bzw. Verfahren wie ein Rohrheizkörper herzustellen und zur Verwendung an ein Steuergerät 2 anzuschließen, das einen Verstärker 3, eine Einheit 4 zur Auswertung der Meßstrom- bzw. Meßspannungsänderungen sowie einen zweipoligen Ausgang 5 zur leitenden Verbindung mit dem Temperaturfühler 1 und einen entsprechenden Eingang 6 zum Anschluß an eine Stromquelle aufweist.

Der Temperaturfühler 1 bildet mit dem größten Teil seiner Länge einen eigensteifen Fühlerarm 7, der frei vorstehend so montiert werden kann, daß er in das zu messende Medium ragt. Der Fühlerarm 7 steht über die Innenseite eines plattenförmigen bzw. ebenen Befestigungsflansches 8 vor, an dem er mit zwei etwa gleichen Schenkeln 9 so befestigt ist, daß er an der Außenseite des Befestigungsflansches 8 zwei nebeneinander in einer gemeinsamen Ebene liegende sowie etwa parallele Anschlußenden 10 bildet. Der Befestigungsflansch 8 weist für jeden Schenkel 9 eine eng angepaßte, über den Umfang geschlossene Durchgangsöffnung 11 auf, durch welche der Schenkel 9 abgedichtet hindurchgeführt ist. Jeder Schenkel kann z.B. durch eine Schweißnaht zwischen seiner Umfangsfläche und wenigstens einer Plattenseite des Befestigungsflansches 8 gesichert sein. An dem vom Befestigungsflansch 8 abgekehrten Ende des Fühlerarmes 7 gehen die zu diesem Ende unter wenigen Winkelgraden divergierenden Schenkel 9 über einen annähernd halbkreisförmigen Bogen 12 ineinander über, der hinsichtlich im wesentlichen aller Querschnittsbereiche gleich wie die Schenkel 9 ausgebildet ist und absatzfrei tangential an diese anschließt, da er in jedem Querschnittsbereich einteilig mit den zugehörigen Querschnittsbereichen der Schenkel 9 ausgebildet ist. Zwischen der Innenseite des Befestigungsflansches 8 und dem Bogen-Scheitel bildet der Temperaturfühler 1 denjenigen Erfassungsbereich 13, in welchem er der zu erfassenden bzw. messenden Temperatur ausgesetzt ist. Alle Schenkel 9 bzw. Bögen 12 liegen über ihre gesamte Länge und ihren Umfang frei, so daß sie vollständig von dem zu messenden Medium umspült werden können.

Ein Fühlergehäuse 14 weist einen einteilig über die gesamte Länge des Erfassungsbereiches 13 und darüberhinaus reichenden, nahtlosen Rohrmantel 15 aus nicht rostendem Stahl auf, welcher eine dünnwandige metallische Außenhaut aller Längsabschnitte des Fühlerarmes 7 sowie die Verbindungsflächen zur Verbindung mit dem Befestigungsflansch 8 bildet. Beide, über die Außenseite des Befestigungsflansches 8 etwa gleich weit vorstehenden Enden des Rohrmantels 15 sind jeweils hier nicht mit einem gemeinsamen, sondern mit einem gesonderten Verschlußstück 16 dicht verschlossen und liegen wie diese in einem lichten Abstand voneinander, der etwa der Querschnittsweite des Rohrmantels 15 entspricht und eine elastische Beweglichkeit erlaubt. Jedes der beiden etwa gleich ausgebildeten Verschlußstücke 16 ist durch einen hartfesten, elektrisch isolierenden Körper aus Keramik mit nur zwei in Längsrichtung aneinander schließenden Abschnitten unterschiedlicher Querschnitte gebildet, der höchstens bis an die durch den Außenumfang definierte Hüllfläche des Rohrmantels 15 reicht. Ein innerer Abschnitt bildet einen Steckvorsprung 17, der eng an den Innenumfang des Endes des Rohrmantels 15 angepaßt und auf ganzer Länge in dieses Ende dicht anliegend eingesteckt sowie ggf. durch eine haftende Kittmasse oder dgl. gesichert ist. An den verhältnismäßig kurzen Steck-Vorsprung 17 schließt ein äußerer, weiterer Endabschnitt 18 an, der etwa gleiche Außenquerschnitte wie der Rohrmantel 15 hat und eine im wesentlichen lückenlose bzw. absatzfreie Fortsetzung von dessem Außenumfang bildet. Der Endabschnitt 18 geht über eine Ringschulter in den Steckvorsprung 17 über, die angeschlagen an der zugehörigen Endfläche 20 des Rohrmantels 15 anliegt.

In einer zentralen, vollständig mit Abstand innerhalb des Außenumfanges liegenden und beide Stirnflächen durchsetzenden Durchgangsbohrung nimmt das Verschlußstück 16 einen im wesentlichen achsgleich zum zugehörigen Ende des Rohrmantels 15 liegenden, massiven und eigensteifen Anschlußstift 21 abgedichtet auf, der durch einen geradlinigen Abschnitt eines Rundrahtes gebildet sein kann. Sein inneres Ende 22 steht über das innere Ende des Verschlußstückes 16 frei bzw. gegenüber dem Rohrmantel 15 berührungsfrei vor. Sein äußeres Ende 23 steht über die äußere Endfläche des Verschlußstückes 23 freiliegend vor und bildet ein Anschlußglied zur elektrisch leitenden Verbindung des Temperaturfühlers 1 mit dem zugehörigen Pol des Ausganges 5.

Innerhalb des Fühlergehäuses 14 und gegenüber dem Rohrmantel 15 berührungsfrei ist ein einziges, strangförmiges Fühlelement 24 angeordnet, das im wesentlichen achsgleich zum Rohrmantel 15 liegt und sich einteilig bzw. mit im wesentlichen konstanten Querschnitten kontinuierlich zumindest über alle Längsabschnitte des Erfassungsbereiches 13 erstreckt, wobei es sich in dieser Weise bis über den Erfassungsbereich 13 hinaus, nämlich bis an die Außenseite des Befestigungsflansches 8, und bis zu einem im Abstand von diesem liegenden Bereich erstrecken kann, der nahe bei den Enden des Rohrmantels 15 bzw. bei den Verschlußstücken 16, jedoch im Abstand von diesen liegt.

Das Fühlelement 24, das den anhand der Schenkel 9 und des Bogens 12 beschriebenen Verlauf und den Befestigungsflansch 8 durchsetzt, ist durch einen einzigen Draht 25 gebildet, der über die gesamte Länge des Fühlelementes 24 als kontinuierliche Wendel 26 mit etwa konstanter Wendelweite und Wendelsteigung gewickelt ist. Die etwa koaxial vollständig innerhalb des Rohrmantels 15 liegende Wendel 26 bildet eine in Fig. 3 erkennbare Mantelbegrenzung 27, die über ihre Länge und/oder ihren Umfang in etwa konstante Abstände vom Außenumfang des Fühlers hat. Jedes Ende des Drahtes 25 bildet ein von der Wendelform abweichend geformtes Anschlußende 28, das am inneren Ende 22 des zugehörigen Anschlußstiftes 21 elektrisch leitend befestigt ist. Das Anschlußende 28 kann z.B. als eng an den Außenumfang des inneren Endes 22 angepaßte Befestigungswendel 29 mit eng aneinander liegenden Windungen ausgebildet, auf das innere Ende 22 aufgesteckt und/oder an diesem durch Schweißung oder dgl. befestigt sein. Die Wendel 26 beginnt unmittelbar benachbart zur Endfläche des inneren Endes 22.

Im wesentlichen alle, noch freien bzw. vom Fühlelement 24, dessen Anschlußbereichen und den Verschlußstücken 16 nicht beanspruchten Raumbereiche des Fühlergehäuses 14 sind mit einer Einbettung 30 aus einer verpreßten, körnigen Einbettmasse 31 verfüllt, die im wesentlichen lückenlos eng an der Innenfläche 32 des Rohrmantels 15, an den Oberflächen des Fühlelementes 24, am Anschlußende 28, am inneren Ende 22 und/oder an der inneren Endfläche 33 des Verschlußstückes 16 anliegt. In diese Einbettung 30 sind somit alle genannten, innerhalb des Fühlergehäuses 14 liegenden Bauteile voll umschlossen eingebettet, wobei die Einbettung 30 eine Stützfüllung bildet, durch die beim Biegen eines Bogens 12 oder dgl. eine Knickung des Rohrmantels 15 ausgeschlossen wird.

Mit dem Befestigungsflansch 8, der ggf. Durchgangslöcher für Befestigungsschrauben aufweist, kann der Temperaturfühler 1 z.B. so abgedichtet an der Wandung eines Fluidbehälters befestigt werden, daß der Fühlerarm 7 berührungsfrei durch einen Durchbruch in dieser Wandung in den Behälter ragt und die Anschlußenden 10 an der Außenseite des Behälters zugänglich sind. Diese Anschlußenden 10 können lösbar mit flexiblen Anschlußleitungen 34 verbunden werden, welche ihrerseits lösbar mit den Polen des Ausganges 5 des Gerätes 2 zu verbinden sind. Dadurch kann der Temperaturfühler, der selbst leicht auswechselbar zu befestigen ist, für viele Anwendungszwecke eingesetzt werden.

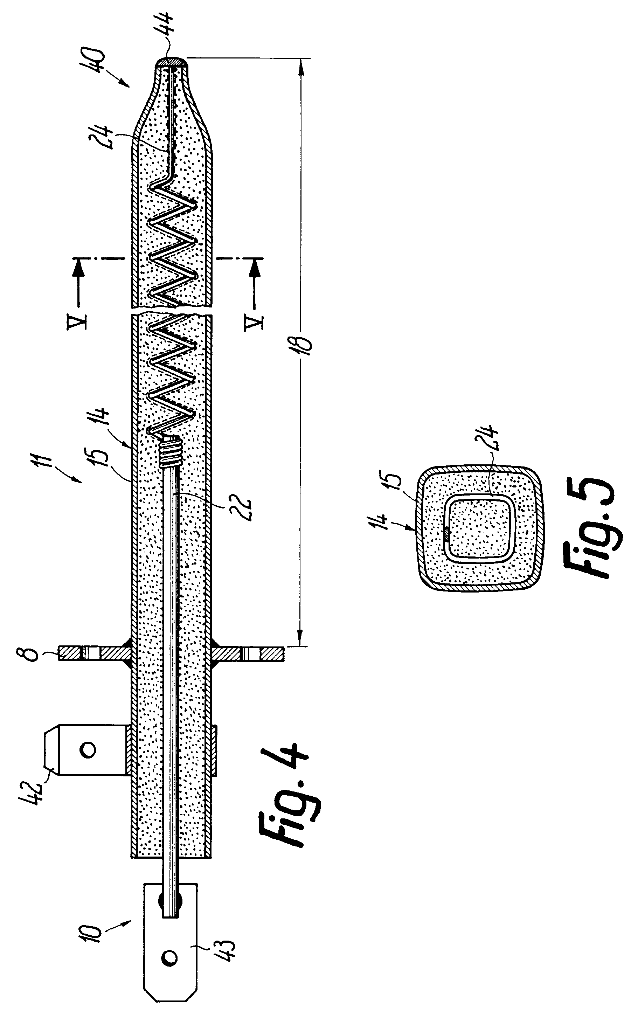

Der in Fig. 4 dargestellte Temperaturfühler 1 hat die Form eines geraden Stabes. Das Fühlergehäuse 14 ist dementsprechend ein gerades Rohr, daß an seinem dem Anschlußende 10 gegenüberliegenden freien Ende 40 etwas verjüngt und dort durch eine Schweißung 44 verschlossen ist, mit der ein Ende 41 des Fühlelementes 24 festgeschweißt ist. Das wendelförmige Fühlelement ist an seinem anderen Ende leitend am Anschlußstift 22 befestigt.

Es ist zu beachten, daß beide Anschlußenden des Fühlelementes 24 im Temperaturerfassungsbereich 13, d.h. auf im wesentlichen gleicher Temperatur liegen. Damit wird das Entstehen von Thermospannungen an den Verbindungsstellen vermieden, die das Meßergebnis verfälschen könnten.

Da der Rohrmantel 15 des Fühlergehäuses 14 die Rückleitung für den Meßstrom bildet, ist außerhalb des Befestigungsflansches 8 eine auf den Rohrmantel gesetzte Anschlußfahne 42 angebracht, während das aus dem Anschlußende 10 herausragende Ende des Anschlußstiftes 22 die andere Steckanschlußfahne 43 trägt.

Durch eine strichlierte Linie auf der Oberfläche des Fühlelementes 24 ist angedeutet, daß sich dort eine Oxydschicht gebildet hat, die durch das eingangs beschriebene Stabilisierungsverfahren gebildet wurde und die das Fühlelement vor weiterer Oxidation und Widerstandsverfälschung schützt.

Fig. 5 zeigt, daß der Querschnitt des Rohrmantels 15 im vorliegenden Fall in Richtung auf ein abgerundetes Quadrat aus dem Kreisquerschnitt verformt ist. Dies wirkt sich auch auf eine entsprechende Formgebung des Wendelquerschnittes des Fühlelementes 24 aus. Durch diese Verformung unter starkem Press- oder Walzdruck ändert sich der Widerstand des Fühlelementes um bis zu 20 Prozent, so daß durch eine ggf. auch automatisierte Verpressung unter Steuerung durch eine Widerstandsmessung eine genaue Justierung des Widerstandswertes des Fühlers im Fertigzustand erzielt werden kann.

## Patentansprüche

1. Temperaturfühler mit einem Fühlergehäuse (14) und einem in diesem angeordneten Fühlelement (24), das wenigstens teilweise in eine Einbettung (30) eingebettet ist, die durch eine gegen das Fühlelement (24) und das Fühlergehäuse (14) verpreßte, aus einem durch Verpressung verdichteten Ausgangswerkstoff bestehende Einbettmasse (31) gebildet ist, dadurch gekennzeichnet, daß die Einbettung (30) auf eine Dauerfestigkeit verfestigt ist und im wesentlichen lückenlos anliegend mit dem Fühlergehäuse (14) sowie dem Fühlelement (24) einen Verbundkörper bildet.

2. Temperaturfühler nach Anspruch 1, dadurch gekennzeichnet, daß er einen langgestreckten Temperatur-Erfassungsbereich (13) aufweist, dessen Länge insbesondere mehr als das 10-fache, vorzugsweise mehr als das 100-fache der Weite des Fühlerquerschnittes beträgt, wobei vorzugsweise das Fühlergehäuse (14) wenigstens teilweise durch einen langgestreckten Mantel (15) gebildet ist, der vorzugsweise unter Verengung des Gehäusequerschnittes gegen die Einbettung (30) gepreßt ist und/oder im wesentlichen vollständig und lückenlos mit der Einbettung (30) und dem Fühlelement (24) gefüllt ist, das vorzugsweise gegenüber dem Mantel (15) des Fühlergehäuses (14) vollständig berührungsfrei ist, wobei es insbesondere durch einen bis zu mindestens einer Endfläche (20) und über den größten Teil seiner Länge annähernd konstante Außen- und/oder Innenquerschnitte aufweisenden Rohrmantel (15) gebildet ist, der an wenigstens einem Ende mit einem Verschlußmittel (16), wie einem Silikonkautschuk-Stopfen, einem eingewalzten Silikonschlauch, einer Silikonöltränkung oder einer Glasfritten-Einschmelzung dicht verschlossen ist.

3. Temperaturfühler nach einem der vorhergehenden Ansprüche, dadurch gekennzeichnet, daß das Fühlelement (24) und/oder die Einbettung (30) wenigstens auf einem Teil der Länge bzw. des Umfanges abgedichtet ummantelt ist, daß vorzugsweise das im wesentlichen geschlossene Wandungen aufweisende Fühlergehäuse (14) mindestens einen abgedichteten Durchtritt für einen Anschlußleiter des Fühlelementes (24) aufweist, der durch ein in eine Durchtrittsöffnung des Fühlergehäuses (14) eingesetztes Verschlußstück (16) gebildet ist, das insbesondere durch einen eigenstabilen Formkörper aus Isolierwerkstoff oder dgl. gebildet und über eine Steckverbindung mit dem Fühlergehäuse (14) verbunden sein kann, wobei vorzugsweise das Verschlußstück (16) eine von Anschlußflächen für den Mantel (15) des Fühlergehäuses (14) vollständig im Abstand liegende Durchtrittsöffnung für einen Anschlußstift (21) oder dgl. aufweist und/oder ein Verschlußstück (16) einen vorstehenden, eng an den Innenumfang des Durchtrittes des Fühlergehäuses (14) angepaßten Steckvorsprung (17) für den Eingriff in das Fühlergehäuse (14) und/oder einen an die Außenseite des Fühlergehäuses anschließenden Endabschnitt (18) aufweist, der vorzugsweise im wesentlichen eine Fortsetzung der anschließenden äußeren Mantelfläche des Fühlergehäuses (14) bildet und/oder in den Steckvorsprung (17) über eine Ringschulter (19) übergeht, die für die Anlage an der den Durchtritt umgebenden Außenfläche (20) des Fühlergehäuses (14) ausgebildet ist.

4. Temperaturfühler nach einem der vorhergehenden Ansprüche, dadurch gekennzeichnet, daß das Fühlergehäuse (14) wenigstens teilweise durch einen wenigstens eine Stabkrümmung (12) aufweisenden Stabkörper gebildet ist, der vorzugsweise annähernd haarnadelförmig ausgebildet ist bzw. zwei von mindestens einem gekrümmten Bogen (12) unter wenigen Winkelgraden konvergierende, insbesondere in einer gemeinsamen Ebene liegende Schenkel (9) aufweist und daß insbesondere das Fühlergehäuse (14) als über einen Befestigungsflansch (8) vorstehender Fühlerarm (7) ausgebildet ist und vorzugsweise mit mindestens einem Schenkel (9) den Befestigungsflansch (8) abgedichtet durchsetzt, der insbesondere durch eine Flanschplatte gebildet ist.

5. Temperaturfühler nach einem der vorhergehenden Ansprüche, dadurch gekennzeichnet, daß das Fühlergehäuse (14) wenigstens teilweise aus einem Werkstoff mit guten Wärmeleiteigenschaften, insbesondere aus Metall, vorzugsweise aus einem rostfreien Werkstoff, wie Edelstahl, besteht und/oder die Einbettung (30) aus wärmeleifähigem, jedoch elektrisch isolierendem Werkstoff, insbesondere aus einem keramischen Werkstoff, wie Magnesiumoxid, besteht und/oder ein Fühlelement (24) durch einen elektrischen Widerstand mit temperaturveränderlichem Widerstandswert gebildet und vorzugsweise im wesentlichen gleichmäßig über das Fühlergehäuse (14) verteilt angeordnet ist, wobei das Fühlelement (24) insbesondere aus einer Legierung besteht, die wenigstens eines der Elemente Nickel, Eisen und Kobalt enthält, wobei sich vorzugsweise der Widerstandswert des elektrischen Widerstandes, insbesondere positiv, im Meßbereich um mindestens 100 %, insbesondere das ganzzahlige Mehrfache von 100 %, ändert und vorzugsweise bei etwa 20° C zwischen mindestens einem Ohm und mehr als 10 Ohm liegt.

6. Temperaturfühler nach einem der vorhergehenden Ansprüche, dadurch gekennzeichnet, daß das Fühlelement (24) wenigstens teilweise langgestreckt und über den größten Teil der Länge des Fühlergehäuses (14), insbesondere im wesentlichen koaxial und/oder mit konstantem Wandabstand zum Fühlergehäuse (14) angeordnet ist, wobei das Fühlelement (24) vorzugsweise zwei Enden bildet, die als Anschlußenden (28) für Anschlußleitungen (34) vorgesehen sind, und/oder durch einen Strang mit über seine Länge im wesentlichen konstanten Querschnitten, insbesondere durch einen Draht (25) gebildet ist sowie vorzugsweise gegenüber seiner Materialdicke größeren Außenquerschnitt aufweist, indem es bevorzugt eine wendelförmige Mantelbegrenzung (27) bildet, und daß vorzugsweise der innerhalb der Mantelbegrenzung (27) liegende Kernraum und/oder der Raum zwischen benachbarten Mantelabschnitten (26) im wesentlichen vollständig mit der Einbettung (30) ausgefüllt ist, wobei ggf. mindestens ein Ende (28) des Fühlelementes (24) mit einem inneren, frei vorstehenden Ende (22) eines Anschlußstiftes (21) leitend verbunden, insbesondere wendelförmig eng um das innere Ende (22) gewickelt und/oder durch Schweißung befestigt ist, wobei vorzugsweise der Anschlußstift (21) einen größeren Durchmesser als das Ausgangsmaterial des Fühlelementes (24) hat.

7. Temperaturfühler nach einem der vorhergehenden Ansprüche, dadurch gekennzeichnet, daß er aus hochtemperaturfesten Werkstoffen besteht, einen Meßbereich bis mindestens etwa 750° C hat und nach Art eines Rohrheizkörpers ausgebildet sowie für den Anschluß an einen Meßstrom ausgebildet ist, der unterhalb eines zur Widerstands-Erwärmung geeigneten Stromwertes liegt, wobei der Anschluß an ein Steuergerät (2) zur Einspeisung und Auswertung eines Meßstromes in das Fühlelement (24) vorgesehen ist, der elektrische Meßstrom vorzugsweise in der Größenordnung von einigen mA liegt und/oder eine Meßspannung im mV-Bereich hat und insbesondere das Steuergerät einen elektronischen Verstärker (3) für die Meßspannung aufweist.

8. Temperaturfühler nach einem der vorhergehenden Ansprüche, dadurch gekennzeichnet, daß das Fühlergehäuse (14) unter Änderung des elektrischen Widerstands des Fühlelementes (24) verformt ist.

9. Temperaturfühler nach einem der vorhergehenden Ansprüche, dadurch gekennzeichnet, daß das Fühlelement (24) ausschließlich in dem der zu messenden Temperatur angesetzten Temperaturerfassungsbereich (13) angeordnet ist, wobei vorzugsweise mindestens eine Verbindungsstelle zwischen Fühlelement (24) und einem Anschlußstift (22) im oder außerhalb des Temperaturerfassungsbereichs liegt.

10. Temperaturfühler nach einem der vorhergehenden Ansprüche, dadurch gekennzeichnet, daß das Fühlelement (24) mit einer durch Wärmebehandlung erzeugten Oxydschicht überzogen ist.

11. Temperaturfühler nach einem der vorhergehenden Ansprüche, dadurch gekennzeichnet, daß ein Ende (40) des rohrförmigen Fühlergehäuses (14) verschlossen ist, und dort das Fühlelement (24) mit dem Fühlergehäuse (14) elektrisch leitend verbunden ist und daß vorzugsweise außerhalb des Befestigungsflansches (8) an dem Fühlergehäuse (14) ein Anschluß (42) angebracht ist.

12. Verfahren zur Herstellung eines Temperaturfühlers mit einem Fühlergehäuse (14), in dem ein elektrisches Widerstands-Fühlelement (24) in Einbettmasse eingebettet und verpresst wird, wobei ein Verpressungsvorgang durch Verformen des Fühlergehäuses (14) vorgenommen wird, dadurch gekennzeichnet, daß die Einbettung (30) auf eine Dauerfestigkeit verfestigt wird und im wesentlichen lückenlos anliegend mit dem Fühlergehäuse (14) sowie dem Fühlelement (24) einen Verbundkörper bildet, und daß der Verpressungsvorgang unter Messung des elektrischen Widerstands des Fühlelementes (24) zur Justierung des Widerstandswertes vorgenommen und nach Erreichen eines gewünschten Widerstandswertes beendet wird.

13. Verfahren zur Herstellung eines Temperaturfühlers mit einem Fühlergehäuse, in dem ein elektrisches Widerstands-Fühlelement (24) in Einbettmasse eingebettet wird, dadurch gekennzeichnet, daß die Einbettung (30) auf eine Dauerfestigkeit verfestigt wird und im wesentlichen lückenlos anliegend mit dem Fühlergehäuse (14) sowie dem Fühlelement (24) einen Verbundkörper bildet, und daß das Fühlelement (24) im eingebetteten Zustand einer Glühbehandlung, vorzugsweise bei Temperaturen von 1300 - 1350 K, unterzogen wird, insbesondere bevor das Fühlergehäuse (14) zu einer Widerstandsjustierung verformt wird.

14. Verfahren zur Herstellung eines Temperaturfühlers mit einem Fühlergehäuse (14), in dem ein elektrisches Widerstands-Fühlelement (24) in Einbettmasse eingebettet wird, dadurch gekennzeichnet, daß die Einbettung (30) auf eine Dauerfestigkeit verfestigt wird und im wesentlichen lückenlos anliegend mit dem Fühlergehäuse (14) sowie dem Fühlelement (24) einen Verbundkörper bildet, und daß bei nicht luftdichter Abdichtung der Fühlergehäuse-Enden das Fühlelement (24) im eingebetteten Zustand einer Oxidationsbehandlung seiner Oberfläche unterzogen wird.

15. Verfahren nach Anspruch 14, dadurch gekennzeichnet, daß die Oxidationsbehandlung durch zahlreiche Erwärmungs- und Abkühlungs-Zyklen, ggf. in mit Sauerstoff angereicherter Atmosphäre, erfolgt.

## Claims

1. Temperature sensor with a sensor casing (14) and a sensing element (24) located therein and which is at least partly embedded in a bed (30), which is formed by an embedding material (31) shape pressed against the sensing element (24) and the sensor casing (14) and made from a starting material compressed by shape pressing, characterized in that the bed (30) is strengthened to an endurance limit and engaging substantially continuously with the sensor casing (14) and the sensing element (24) forms a composite body.

2. Temperature sensor according to claim 1, characterized in that it has an elongated temperature determination area (13), whose length is in particular more than 10 times, preferably more than 100 times the width of the sensor cross-section and preferably the sensor casing (14) is at least partly formed by an elongated jacket (15), which is preferably pressed against the bed (30), accompanied by the narrowing of the casing cross-section and/or is substantially completely and continuously filled with the bed (30) and the sensing element (24), which is preferably completely contact-free with respect to the jacket (15) of the sensor casing (14) and it is in particular formed by a tubular jacket (15) having approximately constant external and/or internal cross-sections up to at least one end face (20) and over most of its length and which is tightly closed at at least one end with a closing piece (16), such as a silicone rubber plug, a rolled in silicone hose, a silicone oil impregnation or a sealed-in glass frit.

3. Temperature sensor according to one of the preceding claims, characterized in that the sensing element (24) and/or the bed (30) is encased in sealed manner at least over part of the length or circumference and preferably the sensor casing (14) having substantially closed walls has at least one sealed passage for a lead of the sensing element (24), which is formed by a closing piece (16) inserted in a passage opening of the sensor casing (14), which is in particular formed by an intrinsically stable, shaped insulating material body or the like and can be connected by means of a plug connection to the sensor casing (14) and preferably the closing piece (16) has a passage opening for a terminal pin (21) or the like completely spaced from connecting faces for the jacket (15) of the sensor casing (14) and/or a closing piece (16) has a projecting, connecting projection (17) adapted closely to the inner circumference of the passage of the sensor casing (14) for engagement in the latter and/or an end portion (18) connected to the outside of the sensor casing and which preferably substantially forms an extension of the connecting, outer circumferential surface of the sensor casing (14) and/or passes into the projection (17) by means of a ring shoulder (19), which is constructed for engagement on the outer face (20) of the sensor casing (14).

4. Temperature sensor according to one of the preceding claims, characterized in that the sensor casing (14) is at least partly formed by a rod body having at least one rod curvature (12), which preferably has an approximately hairpin-like construction or has two legs (9) particularly located in a common plane and converging from at least one curved arc (12) under a few radians and that in particular the sensor casing (14) is constructed as a sensor arm (7) freely projecting over a fastening flange (8) and preferably sealingly traversing with legs (9) the fastening flange (8), which is in particular formed by a flange plate.

5. Temperature sensor according to one of the preceding claims, characterized in that the sensor casing (14) is at least partly made from a material with good heat conducting characteristics, particularly metal, preferably stainless steel, such as high-grade steel and/or the bed (30) is made from heat conducting, but electrically insulating material, particularly a ceramic material, such as magnesium oxide and/or a sensing element (24) is formed by an electrical resistor with a temperature-variable resistance value and is preferably substantially uniformly distributed over the sensor casing (14), the sensing element (24) in particular being formed by an alloy containing at least one of the elements nickel, iron and cobalt and preferably the resistance value of the electrical resistor varies in a positive manner in the measurement range by at least 100% and in particular an integral multiple of 100% and preferably at approximately 20°C between at least 1 Ohm and more than 10 Ohm.

6. Temperature sensor according to one of the preceding claims, characterized in that the sensing element (24) is at least partly elongated and is positioned over most of the length of the sensor casing (14), particularly substantially coaxially and/or with a constant wall spacing with respect to said casing (14), the sensing element (24) preferably forming two ends, which are provided as connection ends (28) for the leads (34), and/or is formed by a strand with substantially constant cross-sections over its length and in particular by a wire (25) and preferably has a larger outside cross-section than its material thickness, in that it preferably forms a helical jacket boundary (27) and that preferably the core area located within the jacket boundary (27) and/or the space between adjacent jacket portions (26) is substantially completely filled by the bed (30) and optionally at least one end (28) of the sensing element (24) is conductively connected to an inner, freely projecting end (22) of a terminal pin (21) and is in particular helically closely wound around the inner end (22) and/or fixed by welding and preferably the terminal pin (21) has a larger diameter than the starting material of the sensing element (24).

7. Temperature sensor according to one of the preceding claims, characterized in that it is made from high temperature-resistant materials, has a measuring range up to at least approximately 750°C and is constructed in the manner of a tubular heater and for connection to a test current, which is below a current value suitable for resistance heating, there being a connection to a control device (2) for feeding in and evaluating a test current in the sensing element (24), the electrical test current preferably being a few mA and/or has a test voltage in the mV range and in particular the control device has an electronic amplifier (3) for the test voltage.

8. Temperature sensor according to one of the preceding claims, characterized in that the sensor casing (14) is deformed, accompanied by a modification of the electrical resistance of the sensing element (24).

9. Temperature sensor according to one of the preceding claims, characterized in that the sensing element (24) is exclusively located in the temperature determination area (13) exposed to the temperature to be measured and preferably at least one connection point is located between the sensing element (14) and a terminal pin (22) in or outside the temperature determination area.

10. Temperature sensor according to one of the preceding claims, characterized in that the sensing element (24) is covered by an oxide coating produced by heat treatment.

11. Temperature sensor according to one of the preceding claims, characterized in that one end (40) of the tubular sensor casing (14) is closed and there the sensing element (24) is electrically conductively connected to the sensor casing (14) and that preferably outside the fastening flange (8) a connection (42) is fitted to the sensor casing (14).

12. Method for the manufacture of a temperature sensor having a sensor casing (14), in which an electrical resistance sensing element (24) is embedded and shape pressed in embedding material, the shape pressing process being carried out by the deformation of the sensor casing (14), characterized in that the bed (30) is strengthened to an endurance limit and in substantially continuously engaging manner with the sensor casing (14) and the sensing element (24) a composite body is formed and that the shape pressing process takes place accompanied by the measurement of the electrical resistance of the sensing element (24) for adjusting the resistance value and is ended on reaching a desired resistance value.

13. Method for the manufacture of a temperature sensor with a sensor casing, in which an electrical resistance sensing element (24) is embedded in embedding material, characterized in that the bed (30) is strengthened to an endurance limit and substantially continuously engaging with the sensor casing (14) and the sensing element (24) forms a composite body and that the sensing element (24) in the embedded state undergoes an annealing treatment, preferably at temperatures of 1300 to 1350 K, particularly before the sensor casing (14) is deformed for resistance adjustment purposes.

14. Method for the manufacture of a temperature sensor with a sensor casing (14), in which an electrical resistance sensing element (24) is embedded in embedding material, characterized in that the bed (30) is strengthened to an endurance limit and substantially continuously engaging with the sensor casing (14) and the sensor element (24) forms a composite body and that in the case of a non-air-tight sealing of the sensor casing ends the sensing element (24) in the embedded state undergoes an oxidation treatment on its surface.

15. Method according to claim 14, characterized in that the oxidation treatment takes place by numerous heating and cooling cycles, optionally in oxygen-enriched atmosphere.

## Revendications

1. Sonde de température comprenant un boîtier de sonde (14) et un élément sensible (24) disposé dans ce dernier qui est au moins partiellement logé dans un enrobage (30), lequel est formé par une masse d'enrobage (31) composée d'un matériau de départ compacté par compression qui est pressée contre l'élément sensible (24) et le boîtier de la sonde (14), caractérisée en ce que l'enrobage (30) est durci pour lui conférer une résistance limite d'endurance et forme avec le boîtier de la sonde (14) et l'élément sensible (24) un corps composite en étant appliqué essentiellement sans intervalle contre ces éléments.

2. Sonde de température selon la revendication 1, caractérisée en ce qu'elle présente une zone sensible de la température (13) allongée dont la longueur correspond notamment à plus de 10 fois, de préférence à plus de 100 fois la dimension de la section transversale de la sonde, le boîtier de la sonde (14) étant au moins partiellement formé par une enveloppe allongée (15) qui est pressée contre l'enrobage (30), de préférence avec un rétrécissement de la section transversale du boîtier et/ou est remplie essentiellement complètement et sans intervalle par l'enrobage (30) et l'élément sensible (24), lequel n'a, de préférence, absolument aucun contact avec l'enveloppe (15) du boîtier de la sonde (14), sachant que le boîtier de la sonde est formé notamment par une enveloppe tubulaire (15) présentant des sections transversales intérieures et/ou extérieures approximativement constantes sur la plus grande partie de sa longueur jusqu'à une surface d'extrémité (20), enveloppe qui est hermétiquement fermée au moins à une extrémité par un moyen de fermeture (16) tel qu'un bouchon en caoutchouc silicone, un tuyau flexible en silicone serti, une imprégnation dans de l'huile de silicone ou un scellement en fritte.

3. Sonde de température selon l'une des revendications précédentes, caractérisée en ce que l'élément sensible (24) et/ou l'enrobage (30) est (sont) enveloppé(s) de manière étanche sur au moins une partie de la longueur ou du pourtour, en ce que de préférence le boîtier de la sonde (14) présentant des parois essentiellement fermées présente au moins un passage bouché pour un conducteur de raccordement de l'élément sensible (24), passage bouché qui est formé par une pièce de fermeture (16) logée dans une ouverture de passage du boîtier de la sonde (14), pièce de fermeture qui est notamment constituée par un corps moulé ayant une forme stable et composé d'un matériau isolant ou analogues et qui peut être reliée par enfichage au boîtier de la sonde (14), sachant que de préférence la pièce de fermeture (16) présente, une ouverture de passage pour une broche de sortie (21) ou analogues qui est totalement éloignée de surfaces de raccordement pour l'enveloppe (15) du boîtier de la sonde (14), et/ou qu'une pièce de fermeture (16) présente une saillie enfichable (17) étroitement adaptée au pourtour intérieur du passage du boîtier de la sonde (14) qui est destinée à être mise en prise avec le boîtier de la sonde (14) et/ou un segment terminal (18) raccordé à la face extérieure du boîtier de la sonde, segment qui constitue, de préférence, essentiellement un prolongement de la surface latérale extérieure du boîtier de la sonde (14) qui fait suite et/ou devient la saillie enfichable (17) par le biais d'un épaulement annulaire (19), épaulement qui est conçu pour être appliqué contre la surface extérieure (20) du boîtier de la sonde (14) qui entoure le passage.

4. Sonde de température selon l'une des revendications précédentes, caractérisée en ce que le boîtier de la sonde (14) est formé au moins partiellement par un corps en forme de barre présentant une courbure (12), qui est, de préférence, réalisé approximativement en forme d'épingle à cheveux ou qui présente deux branches (9) convergeant de quelques degrés à partir d'au moins une partie courbe (12) et disposées notamment dans un plan commun, et en ce que notamment le boîtier de la sonde (14) est réalisé sous la forme d'un bras de sonde (7) faisant saillie d'une bride de fixation (8) et traversant de manière étanche la bride de fixation (18) de préférence avec au moins une branche (9), bride qui est formée par une plaquette.

5. Sonde de température selon l'une des revendications précédentes, caractérisée en ce que le boîtier de la sonde (14) est au moins partiellement composé d'un matériau conduisant bien la chaleur, notamment de métal, de préférence d'un matériau inoxydable tel que de l'acier surfin, et/ou en ce que l'enrobage (30) est composé d'un matériau conduisant la chaleur mais isolant électriquement, notamment d'un matériau céramique tel que de l'oxyde de magnésium, et/ou en ce qu'un élément sensible (24) est formé par une résistance électrique présentant une valeur de résistance variant en fonction de la température et est disposé essentiellement de façon uniformément répartie sur le boîtier de la sonde (14), sachant que l'élément sensible (24) est notamment composé d'un alliage qui contient au moins du nickel, du fer et du cobalt, sachant que la valeur de résistance de la résistance électrique varie, notamment positivement, sur la plage de mesure d'au moins 100 %, notamment d'un multiple entier de 100 % et se situe à 20° C environ dans un domaine compris entre au moins un ohm et plus de 10 ohms.

6. Sonde de température selon l'une des revendications précédentes, caractérisée en ce que l'élément sensible (24) est au moins partiellement allongé et est disposé sur la plus grande partie de la longueur du boîtier de la sonde (14), notamment essentiellement coaxialement par rapport au boîtier de la sonde (14) et/ou avec un écart constant par rapport à la paroi de ce dernier, sachant que l'élément sensible (24) forme, de préférence, deux extrémités qui sont prévues en tant qu'extrémités de raccordement (28) pour des lignes de raccordement (34) et/ou est formé par une branche dont les sections transversales sont essentiellement constantes sur toute sa longueur, notamment par un fil (25) et présente, de préférence, par rapport à l'épaisseur du matériau, une section transversale extérieure plus importante dans la mesure où il forme une enveloppe en forme d'hélice (27), et en ce que de préférence l'espace central situé à l'intérieur de l'enveloppe (27) et/ou l'espace entre des segments adjacents de l'enveloppe (26) est essentiellement entièrement rempli par l'enrobage (30), sachant que, le cas échéant, au moins une extrémité (28) de l'élément sensible (24) est reliée à une extrémité interne et faisant saillie librement (22) d'une broche de sortie (21) de manière à conduire le courant, et est notamment étroitement enroulée en forme d'hélice autour de l'extrémité interne (22) et/ou y est fixée par soudage, sachant que la broche de sortie (21) présente, de préférence, un diamètre supérieur à celui du matériau de départ de l'élément sensible (24).

7. Sonde de température selon l'une des revendications précédentes, caractérisée en ce qu'elle est composée de matériaux résistant aux températures élevées, qu'elle présente un domaine de mesure allant au moins jusqu'à 750° C et qu'elle est réalisée à la manière d'un corps de chauffe tubulaire et conçue pour être raccordée à un courant de mesure dont la valeur est inférieure à une valeur appropriée pour chauffer la résistance, sachant que le raccordement à un appareil de commande (2) pour alimenter et interpréter un courant de mesure est prévu dans l'élément sensible (24), que le courant de mesure est de l'ordre de quelques mA et/ou a une tension de mesure dans le domaine du mV, et notamment que l'appareil de commande présente un amplificateur électronique (3) pour la tension de mesure.

8. Sonde de température selon l'une des revendications précédentes, caractérisée en ce que la déformation du boîtier de la sonde (14) modifie la résistance électrique de l'élément sensible (24).

9. Sonde de température selon l'une des revendications précédentes, caractérisée en ce que l'élément sensible (24) est uniquement disposé dans la zone sensible de la température (13) associée à la température à mesurer, sachant que de préférence au moins un point de liaison entre l'élément sensible (24) et une broche de sortie (22) se situe dans ou en dehors de la zone sensible de la température.

10. Sonde de température selon l'une des revendications précédentes, caractérisée en ce que l'élément sensible (24) est recouvert d'une couche d'oxyde obtenue par traitement thermique.

11. Sonde de température selon l'une des revendications précédentes, caractérisée en ce qu'une extrémité (40) du boîtier tubulaire de la sonde (14) est fermée, et qu'à cet endroit, l'élément sensible (24) est relié au boîtier de la sonde (14) de manière à conduire le courant, et en ce que, de préférence en dehors de la bride de fixation (8), un raccordement (42) est fixé sur le boîtier de la sonde (14).

12. Procédé pour fabriquer une sonde de température comportant un boîtier de sonde (14) dans lequel un élément sensible à résistance électrique (24) est enrobé dans une masse d'enrobage et compacté, sachant que le processus de compactage est réalisé en déformant le boîtier de la sonde (14), caractérisé en ce que l'enrobage (30) est durci pour lui conférer une résistance limite d'endurance et forme avec le boîtier de la sonde (14) et l'élément sensible (24) un corps composite en étant appliqué essentiellement sans intervalle contre ces éléments, et en ce que le processus de compactage est mis en oeuvre tout en mesurant la résistance électrique de l'élément sensible (24) pour ajuster la valeur de résistance et se termine après avoir obtenu une valeur de résistance souhaitée.

13. Procédé pour fabriquer une sonde de température dans lequel un élément sensible à résistance électrique (24) est enrobé dans une masse d'enrobage, caractérisé en ce que l'enrobage (30) est durci pour lui conférer une résistance limite d'endurance et forme avec le boîtier de la sonde (14) et l'élément sensible (24) un corps composite en étant appliqué essentiellement sans intervalle contre ces éléments, et en ce que l'élément sensible (24) enrobé est soumis à un recuit, de préférence à des températures de 1300 - 1350 K, et ce, notamment avant que le boîtier de la sonde (14) ne soit déformé pour ajuster la résistance.

14. Procédé pour fabriquer une sonde de température avec un boîtier de sonde (14) dans lequel un élément sensible électrique à résistance (24) est enrobé dans une masse d'enrobage, caractérisé en ce que l'enrobage (30) est durci pour lui conférer une résistance limite d'endurance et forme avec le boîtier de la sonde (14) et l'élément sensible (24) un corps composite en étant appliqué essentiellement sans intervalle contre ces éléments, et en ce que, pour le cas où les extrémités du boîtier de la sonde ne sont pas hermétiquement fermées, la surface de l'élément sensible (24) enrobé est soumise à un traitement oxydant.

15. Procédé selon la revendication 14, caractérisé en ce que le traitement oxydant est constitué par de nombreux cycles de réchauffement et de refroidissement, le cas échéant dans une atmosphère enrichie en oxygène.
